# EUROPEAN PATENT APPLICATION

(11) **EP 4 309 955 A1**
(43) Date of publication of application: **24.01.2024**
(21) Application number: 21930808.7
(22) Date of filing: 18.03.2021
(51) Int. Cl.: B60Q 1/52

(54) **MULTI-LIGHT PROJECTION WARNING DEVICE FOR VEHICLE TURNING**

(71) Applicant: Ching, Ya-Chi, Taipei City, Taiwan 103018 (TW)
(72) Inventor: Ching, Ya-Chi, Taipei City, Taiwan 103018 (TW)
(74) Representative: Cabinet Chaillot
(86) International application number: PCT/CN2021/081478
(87) International publication number: WO 2022/193216

(57) **Abstract**

The invention discloses a multi-lighting projection warning device for vehicle turning, which comprises a composite lamp and a control unit. The composite lamp is arranged on one side of a vehicle and combined with a range indicator light, a contour indicator light, and a text or pattern indicator light, so that the composite lamp can project lighting to a visual blind spot when the vehicle turns or reverses to appear a warning area. The range indicator light is used to illuminate an entire range of the warning area, the contour indicator light is used to clearly mark a contour of the warning area, and the text or pattern indicator light is used to project text or pattern on the warning area to enhance warning effect. The control unit is connected to the composite lamp to enable functions of controlling rotation and start-stop lighting of the composite lamp. Thereby, when the vehicle is turning, the invention projects composite lightings on the ground at the turning side to form the warning area, so as to actively warn other passers-by to dodge the warning area and increase the safety of passers-by.

## Description

### FIELD OF THE INVENTION

The invention relates to a vehicle warning device, in particular to a device for projecting a variety of lighting warnings in a blind spot area of a vehicle when the vehicle is turning, so as to actively provide a warning area for passers-by, reduce the collision accidents caused to pedestrians or other vehicles when the vehicle is turning, and improve road safety.

### BACKGROUND OF THE INVENTION

With the development of society, vehicles have become an indispensable product for modern people's life or work. Whether it is short-distance ride instead of walk or long-distance transportation, the use of vehicles has become an important part of most people's lives, and also provides people with convenient freedom of movement.

Accompanied by the widespread use of vehicles, traffic accidents have also become a normal social problem. There are many reasons for this problem, such as road obstacle, signal failure, poor vehicle condition, human factor, etc.; however, no matter what the reasons are, the tragedies caused are mostly irreparable and have a great impact.

For this reason, how to improve road safety is a topic that everyone needs to pay attention to and should not be careless. In addition to the special authorities should pay attention to the state of the road at all times and remove obstacles immediately, everyone should start by themselves and comply with laws and regulations, and never covet the convenience of the moment, so as to reduce the occurrence of man-made accidents.

However, in addition to the above situation that can be grasped, there are still some traffic accidents that are difficult to predict, most of which are related to the structure of the vehicle itself, causing accidents to happen endlessly.

In the case of a vehicle turning action, the rear wheel on the turning side will shift inward, so that the trajectory of the rear wheel will not coincide with that of the front wheel. The resulting gap is called the "difference of radius between inner wheels". The area of the difference of radius between inner wheels will form a visual blind spot for the vehicle driver, and will be enlarged as the volume of the vehicle increases. When a smaller object, such as a pedestrian or a motorcycle enters the difference of radius between inner wheels area, it is difficult for the driver to notice. Thus, if there is no other means of reminding, an accident in which a turning vehicle collides with a pedestrian or a cyclist may occur, resulting in serious casualty accidents.

To solve the problem of turning blind spot, some large vehicles have provided solutions, which are mainly to add more rear-view mirrors or photographic lenses. When the vehicle is turning, the image of the blind spot area is provided for the driver to observe immediately, so that the driver can handle it properly.

Nevertheless, the aforementioned solution can only provide reference information for the vehicle driver, but cannot warn other passers-by. In this way, even if the driver knows that someone has entered the visual blind spot and slowed down the speed, the person entering the visual blind spot is still unable to notice and is prone to collision with the vehicle.

Therefore, if the vehicle can actively issue a prompt warning to other passers-by on the turning side of the vehicle when the vehicle is turning, so that the passers-by can dodge, it will be more effective to reduce the collision accidents that occur when the vehicle is turning.

In view of the foregoing deficiencies, the inventor is actively conducting research and development, considering proactively providing external warning when the vehicle is turning to reduce the occurrence of traffic accidents. Through discussion and implementation, the multi-lighting projection warning device for vehicle turning can be completed.

### SUMMARY OF THE INVENTION

The main objective of the invention is to provide a multi-lighting projection warning device for vehicle turning, which projects warning lighting on the ground at the turning side when the vehicle is turning to actively warn other passers-by to dodge the warning area and increase the safety of passers-by.

Another objective of the invention is to provide a multi-lighting projection warning device for vehicle turning, which utilizes a variety of lightings to be projected simultaneously to make the warning area more clear and obvious, so that passers-by can more clearly dodge the warning area.

The other objective of the invention is to provide a multi-lighting projection warning device for vehicle turning, which is suitable for various types of vehicles, especially for large vehicles.

According to the foregoing objectives, the invention to be achieved is a multi-lighting projection warning device for vehicle turning, which comprises a composite lamp and a control unit.

The composite lamp is arranged on one side of a vehicle, which is combined with a range indicator light, a contour indicator light, and a text or pattern indicator light. The composite lamp projects lighting towards a visual blind spot of the turning vehicle to appear a warning area when the vehicle is turning. Among them, the range indicator light is used to illuminate an entire range of the warning area, the contour indicator light is used to clearly mark a contour of the warning area, and the text or pattern indicator light is used to project text or pattern on the warning area to enhance warning effect.

The control unit is connected to the composite lamp, and enables functions of the control unit to control rotation, start-stop lighting of the composite lamp.

In the foregoing structure, the control unit separately or simultaneously adjusts color, brightness, clarity, flashing and other actions of the range indicator light, the contour indicator light, and the text or pattern indicator light.

Further, the control unit individually controls the rotation of the text or pattern indicator light to move or change the text or pattern within the entire range of the warning area.

Or, the control unit is connected to an alarm to send out a warning sound.

Furthermore, the control unit is connected to an action sensor which faces an edge of the contour of the warning area. When an object enters the warning area, the action sensor is triggered and the control unit sends out the warning sound through the alarm.

In addition, the control unit is connected to a parameter unit which records model, length and other information of the vehicle, so that the control unit can automatically adjust a projection direction and a range of the composite lamp to generate a best of the warning area of the vehicle.

Moreover, a lampshade is arranged on an outside of the composite lamp, and a knob is arranged on an outside of the lampshade, the knob controls an angle of the composite lamp to adjust a range of the warning area.

In addition, a slit is arranged on the lampshade, so that a light ray of the contour indicator light passes through the slit to project a sharper line of the contour.

And, a plurality of composite lamps can be simultaneously arranged on one side of the vehicle, so that the light rays projected by the plurality of composite lamps overlap each other to form the warning area conforming to the size of the vehicle.

Or, the composite lamp is additionally arranged behind the vehicle to project a warning area thereof.

### BRIEF DESCRIPTION OF THE DRAWINGS

FIG. 1 is a block diagram of a structure composition according to the invention.
FIG. 2 is a schematic diagram of a composite lamp structure according to the invention.
FIG. 3 is a diagram of an embodiment according to the invention.
FIG. 4 is a reference diagram of a warning area change when a vehicle is turning according to the invention.
FIG. 5 is an application example diagram of an action sensor according to the invention.
FIG. 6 is an application example diagram of a plurality of composite lamps arranged on one side of a vehicle according to the invention.
FIG. 7 is an application example diagram of a composite lamp arranged behind the vehicle according to the invention.

### Description of Reference Signs

| | | | |
|---|---|---|---|
| 100 | composite lamp | 110 | range indicator light |
| 120 | contour indicator light | 130 | text or pattern indicator light |
| 140 | lampshade | 150 | knob |
| 160 | slit | 200 | control unit |
| 210 | alarm | 220 | action sensor |
| 300 | vehicle | 310 | parameter unit |
| 400 | warning area | 410 | contour |
| 420 | text or pattern | 500 | passers-by |

### DETAILED DESCRIPTION OF THE PREFERRED EMBODIMENTS

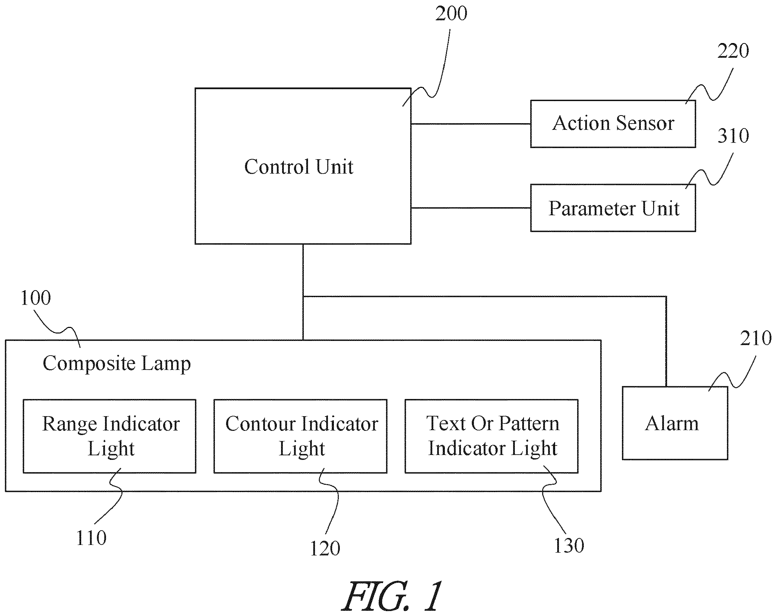

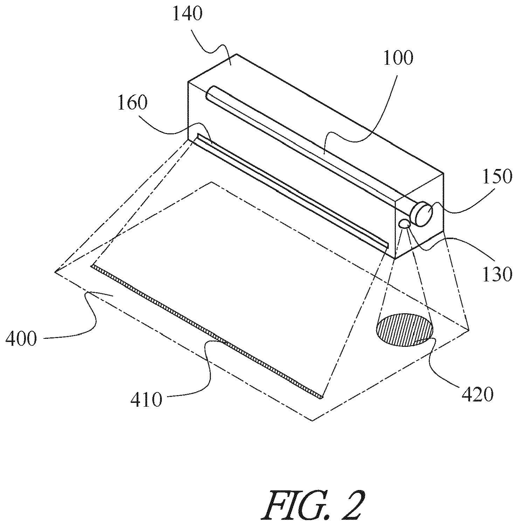

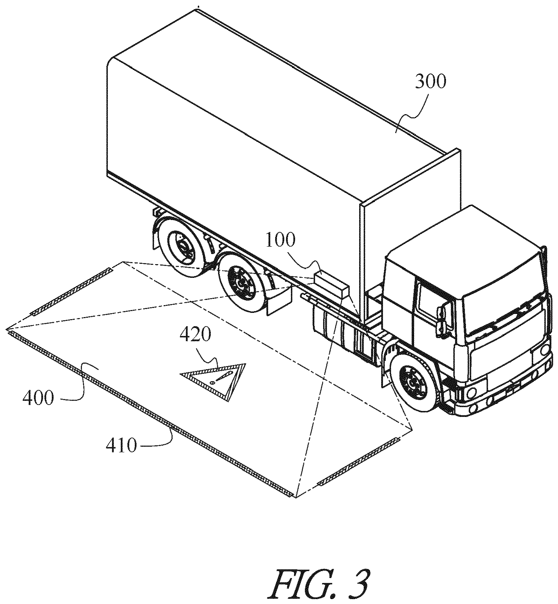

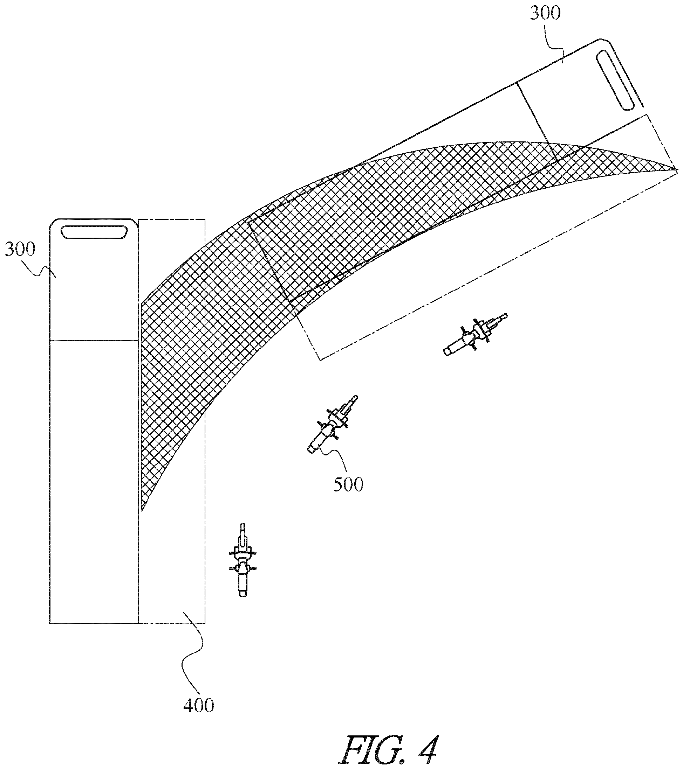

Please refer to FIG. 1 to FIG. 4, the invention provides a multi-lighting projection warning device for vehicle turning, which mainly includes a composite lamp 100 and a control unit 200.

The composite lamp 100 is arranged on one side of a vehicle 300, which is combined with a range indicator light 110, a contour indicator light 120, and a text or pattern indicator light 130. The composite lamp 100 projects lighting towards a visual blind spot of the turning vehicle 300 to appear a warning area 400 when the vehicle 300 is turning. Among them, the range indicator light 110 is used to illuminate an entire range of the warning area 400, the contour indicator light 120 is used to clearly mark a contour 410 of the warning area 400, and the text or pattern indicator light 130 is used to project text or pattern 420 on the warning area 400 to enhance warning effect.

The control unit 200 is connected to the composite lamp 100, and enables functions of the control unit 200 to control rotation, start-stop lighting of the composite lamp 100.

By means of the aforementioned structure, the invention projects three kinds of lightings on the warning area 400. Usually, for the general designer's thinking, only the entire range of the warning area 400 will be irradiated. However, in practice, due to the influence of weather, time, and road conditions, the lighting within the warning area 400 cannot be consistent, and its edge is not obvious enough, which easy to make the overall lighting effect incomplete and it is difficult to provide useful warning effect for other passers-by 500. By using the design of the invention, in addition to the relatively vague entire range, the contour 410 of the warning area 400 can be clearly displayed to let the passers-by 500 follow. In addition, the vivid combination of the text or pattern 420 can actively warn the passers-by 500 to be careful to achieve the best effect.

To increase the warning effect, the control unit 200 can separately or simultaneously adjust the functions of the range indicator light 110, the contour indicator light 120, and the text or pattern indicator light 130, and make changes as needed. Then, it can also change the respective color, brightness, clarity, flashing and other actions of each lamp, and their combinations will become thousands, so it can naturally achieve the best effect. Of course, these warning actions must comply with relevant laws and regulations, and should not be too violent; otherwise it will have adverse effects on the passers-by 500.

With regard to the text or pattern indicator light 130, the control unit 200 may individually control the rotation of the text or pattern indicator light 130 to move or change the text or pattern 420 within the entire range of the warning area 400, or to make a marquee effect, so as to more clearly expose the entire range of the warning area 400.

In addition to using lightings, the control unit 200 can also be connected to an alarm 210 to send out a warning sound.

Furthermore, in order to facilitate the setting of the warning area 400 of the different vehicle 300, the control unit 200 of the invention is further connected to a parameter unit 310 which records the model, length and other information of the vehicle 300, so that the control unit 200 can automatically adjust a projection direction and a range of the composite lamp 100 according to the parameters of the vehicle 300 to generate a best warning area 400 of the vehicle 300.

In addition, with regard to the composite lamp 100, a lampshade 140 is arranged on an outside of the composite lamp 100, which provides basic protection or waterproof, dustproof and heat dissipation functions. A knob 150 is arranged on an outside of the lampshade 140, which may control an angle of the composite lamp 100 to adjust a range of the warning area 400. By means of the knob 150 cooperates with the control unit 200 to obtain the best result.

A slit 160 is arranged on the lampshade 140, so that the light ray of the contour indicator light 120 passes through the slit 160 to project a sharper line of the contour 410.

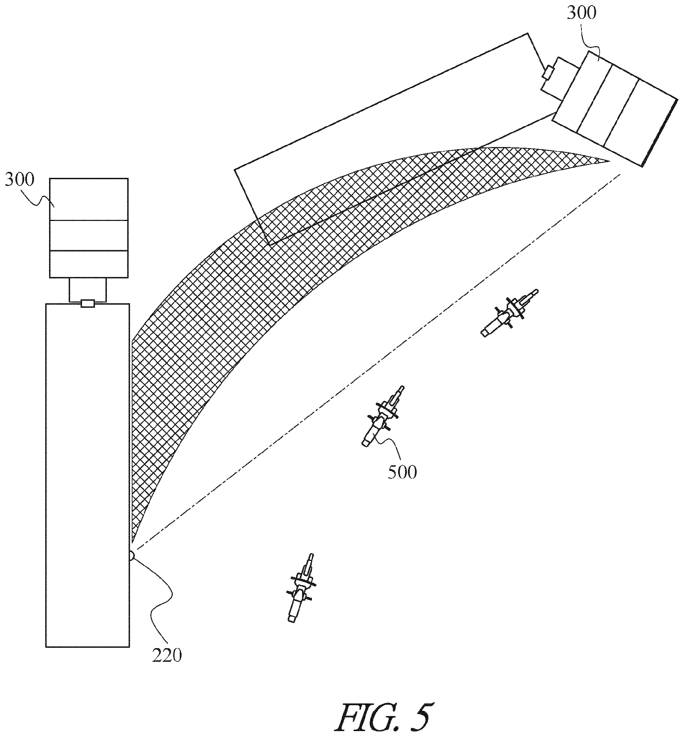

In addition to the foregoing structure, please refer to FIG. 1 and FIG. 5, the control unit 200 is connected to an action sensor 220 which can be installed together with the composite lamp 100 or separately installed at the front or rear of the vehicle 300, and sense towards an edge of the contour 410 of the warning area 400. When an object enters the warning area 400, the action sensor 220 is triggered and the control unit 200 sends out the warning sound through the alarm 210.

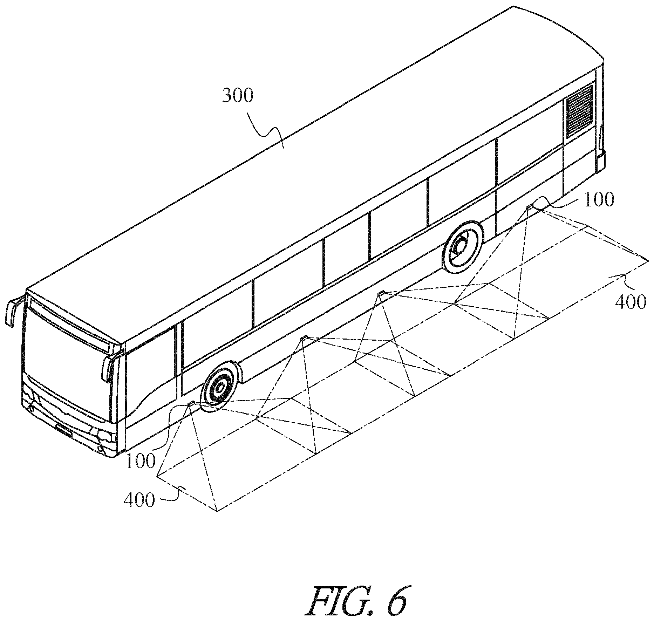

Also, please refer to FIG. 6, in addition to adjusting the size of the composite lamp 100 according to the length of the vehicle 300, or for the vehicle 300 that is too long, a plurality of composite lamps 100 can be simultaneously arranged on one side of the vehicle 300, so that the light rays projected by the plurality of composite lamps 100 overlap each other to form the warning area 400 conforming to the size of the vehicle 300.

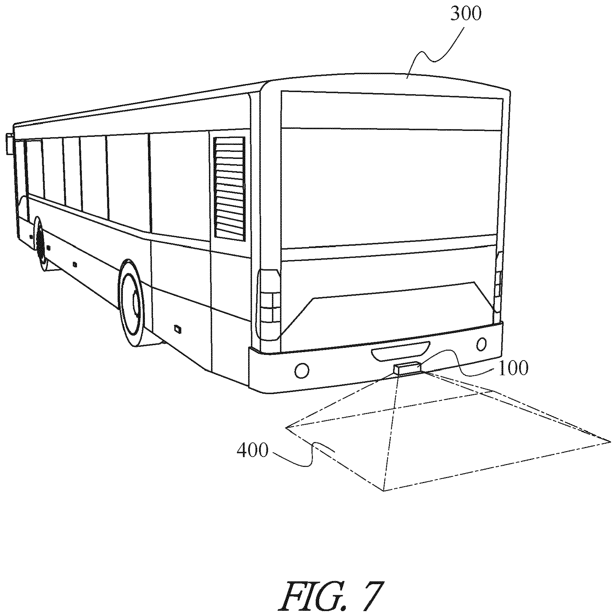

As shown in FIG. 7, in addition to the side of the vehicle 300, the invention also sets the composite lamp 100 behind the vehicle 300 to project a warning area 400 thereof as a warning function for reversing or reverse turning.

To sum up the above description, the functions that can be achieved by the invention have been clearly shown. Of course, there are many types of the range indicator light 110, the contour indicator light 120, and the text or pattern indicator light 130, such as LED lights, laser lights or halogen lights. All those that can perform effective lighting functions belong to the patent application scope of the invention.

The invention can be applied to any vehicle 300, but is mainly applied to large vehicles 300, such as large passenger vehicles, buses, trucks, dump trucks, tour buses, tractor-full trailers, tractor-semi trailers or freight cars, etc., and there is no restriction here.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A multi-lighting projection warning device for vehicle turning, comprising:
a composite lamp combined with a range indicator light, a contour indicator light, and a text or pattern indicator light; and
a control unit connected to the composite lamp to enable functions of controlling rotation and start-stop lighting of the composite lamp;
wherein the composite lamp is arranged on one side of a vehicle and projects lighting to a visual blind spot when the vehicle is turning to appear a warning area;
wherein the range indicator light is used to illuminate an entire range of the warning area;
wherein the contour indicator light is used to clearly mark a contour of the warning area; and
wherein the text or pattern indicator light projects text or pattern on the warning area to enhance warning effect.

2. The multi-lighting projection warning device for vehicle turning of claim 1, wherein the control unit separately or simultaneously adjusts color, brightness, clarity, flashing and other actions of the range indicator light, the contour indicator light, and the text or pattern indicator light.

3. The multi-lighting projection warning device for vehicle turning of claim 1, wherein the control unit controls rotation of the text or pattern indicator light to move or change the text or pattern within the entire range of the warning area.

4. The multi-lighting projection warning device for vehicle turning of claim 1, wherein the control unit is connected to an alarm to send out a warning sound.

5. The multi-lighting projection warning device for vehicle turning of claim 4, wherein the control unit is connected to an action sensor which faces an edge of the contour of the warning area, and when an object enters the warning area, the action sensor is triggered and the control unit sends out the warning sound through the alarm.

6. The multi-lighting projection warning device for vehicle turning of claim 1, wherein the control unit is connected to a parameter unit which records model, length and other information of the vehicle, so that the control unit can automatically adjust a projection direction and a range of the composite lamp to generate a best of the warning area of the vehicle.

7. The multi-lighting projection warning device for vehicle turning of claim 1, wherein a lampshade is arranged on an outside of the composite lamp, and a knob is arranged on an outside of the lampshade, the knob controls an angle of the composite lamp to adjust a range of the warning area.

8. The multi-lighting projection warning device for vehicle turning of claim 7, wherein a slit is arranged on the lampshade, so that a light ray of the contour indicator light passes through the slit to project a sharper line of the contour.

9. The multi-lighting projection warning device for vehicle turning of claim 1, wherein a plurality of composite lamps are simultaneously arranged on one side of the vehicle, so that light rays projected by the plurality of composite lamps overlap each other to form the warning area conforming to a size of the vehicle.

10. The multi-lighting projection warning device for vehicle turning of claim 1, wherein the composite lamp is additionally arranged behind the vehicle to project a warning area thereof.
